# EUROPEAN PATENT SPECIFICATION

(11) **EP 1 815 584 B1**
(45) Date of publication and mention of the grant of the patent: **19.10.2011**
(21) Application number: 05815537.5
(22) Date of filing: 22.11.2005
(51) Int. Cl.: H02M 5/293

(54) **ELECTRONIC TWO-WIRE SWITCH**
ZWEIDRAHT-SCHALTER
COMMUTATEUR ELECTRONIQUE A DEUX FILS

(30) Priority: 23.11.2004 FI 20041504
(43) Date of publication of application: 08.08.2007
(73) Proprietor: Schneider Electric Industries S.A.S., 92500 Rueil-Malmaison (FR)
(72) Inventor: KAIJÄRVI, Mikko, FI-00200 HELSINKI (FI); LUUKKANEN, Mika, FI-02260 ESPOO (FI)
(74) Representative: Tanhua, Pekka Vilhelm
(86) International application number: PCT/FI2005/000495
(87) International publication number: WO 2006/056640

(56) References cited:
- EP-A- 1 367 704
- EP-A- 1 429 221
- US-A- 5 789 894
- US-A- 6 150 798
- US-A1- 2002 181 251
- US-A1- 2004 178 776

## Description

The invention relates to an electronic two-wire switch as defined in the preamble of claim 1.

Electronic two-wire switches act as electric switches, and they are used for connecting, disconnecting and for power control of electric appliances, such as lighting fixtures, electric motors and electric heaters connected to an AC source, such as an AC mains. In addition, switches are controlled both manually and e.g. by means of timers, pecu switches and motion sensors. The two-wire switch is connected to one single conductor, an electric conductor, which consequently ends in and starts from the switch.

Such appliances, i.e. the loads to which the AC supply is regulated/controlled over the electric switch, are usually disposed with both the mains phase advance, i.e. the phase voltage/electric conductor and the neutral conductor, i.e. the earth connected to the appliances. The power supply to the control unit of the electric switch and possibly to the electric switch proper is then taken directly from the mains supply, i.e. from between the electric conductor and the neutral conductor. However, one should note that a mains neutral conductor is not always available. This is the case e.g. of wall outlets for disconnectors in domestic wiring applications, where no neutral conductor is installed. If the current supply to the electric switch and its control unit is carried out in the conventional manner, a neutral conductor must then be provided as retrofitting.

An electric switch having only an electric conductor available for current supply involves the problem that the operation of its control unit, and in many cases the electric switch proper, require electric power both when the electric switch is switched off, i.e. in conductive state, and when the electric switch is switched on, i.e. in non-conductive state. Since the phase conductor alone passes across the electric switch, there will be no reference potential, such as earth potential, for generating a voltage difference and for providing current supply to the electric switch and its control unit on the basis of this.

US-4 504 778 discloses an electronic two-wire switch, which is connected in series with the load and is controlled by a control unit, whose electric power is supplied from the dropout voltage across the switch especially when the switch is in conductive state.

US-6 690 150 also discloses an electronic two-wire switch utilising the dropout voltage of the switch for power supply to the control unit.

Prior art electronic two-wire conductors use a triac as the actual switch. One of the characteristics of such a switch is that the dropout voltage across the switch is Independent of the load current and substantially constant. In addition, the dropout voltage is relatively high; it is typically in the range 1.0 - 1. 5 V. Consequently, the losses of a triac switch will remain substantially equal regardless of load current fluctuations.

Switches using triac involve the problem that load protection against short-circuiting needs to be provided by means of a separate fuse.

US-5789894 discloses an AC motor driving circuit by means of which the rotation speed of the motor can be controlled. The driving circuit comprises solid state switches, such switches as FETs or IGBTs, by which current to the motor is switched on and off repeatedly. The switching is accomplished by means of an oscillator, which pulse signal can be continuously controlled by chancing the width of the pulses. The driving circuit further comprises a DC power supply having large storage capacitors to supply electric power to other parts of said driving circuit, when the switching means are closed and motor current flows through them. The document shows that FETs and IGBTs has utilized as switches instead of triacs.

The invention has the purpose of overcoming the inconveniences relating to prior art two-wire switches mentioned above. The invention also has the purpose of providing a new two-wire switch particularly adapted for use in lighting fixtures.

The two-wire switch of the invention Is characterised by the features defined in claim 1. The dependent claims describe preferred embodiments of the invention.

In the invention a two-wire switch comprises a control unit configurated to use phase regulation to supply control voltage signals to a switch proper, which are combined with control voltages from a measuring and control unit, the switch proper consisting of at least one voltage-controlled semiconductor switch, and comprising additionally a power source for the control unit such that is disposed to take electric power from voltage across the switch with the switch both in non-conductive and in conductive state. In accordance with the invention the two-wire switch is configured not to bring the switch into completely conductive state, and the measuring and control circuit comprises an amplifier for amplifying the dropout voltage across the switch when the switch is in conductive state and an adapter circuit for adapting an output of the amplifier to a level suitable to operate as a control voltage for regulating the resistance of the switch and at the same time the voltage for the power source on the basis of said dropout voltage by combining an output of the adapter circuit with the control voltage signals from the control unit.

The basic idea of the invention is the principle of never controlling the semi-conductor switch into a fully conductive state, but regulating its resistance value actively so as to obtain a dropout voltage across the switch that is on the voltage level considered appropriate. This yields the advantage of low switch losses and of optimised voltage across the switch, i.e. of optimised voltage level. The voltage level is determined by the techniques used for generating the voltage rating of the control unit. A switch-mode power supply is advantageously used, with approx. 1 V currently set as the dropout voltage level (chopper voltage). Owing to recent developments in chopper technology, the dropout voltage can now be reduced to a level of 0.3 V, for instance.

In the most advantageous embodiment of the invention, a voltage-controlled semiconductor switch consists of two semiconductor switches connected in succession, such as a pair of field effect transistors, especially MOSFET (Metal Oxide Semiconductor Field Effect Transistor).

In the invention, the measurement and control circuit comprises at least one amplifier, such as an operation amplifier whose voltage gain can be easily set, for amplifying the measured dropout voltage, and also an adapter circuit following the amplifier, most advantageously a resistor chain, in order to provide appropriate control voltage in the control terminal of one semiconductor switch, or in the most advantageous case, in the control terminals of a pair of semiconductor switches. Thus, for instance, the control voltage of a MOSFET acting as a semiconductor switch may fluctuate within the range 1-15 V, these voltages bringing the switch into conductive state and non-conductive state, i.e. off-state, respectively. In fact, one can reach the appropriate control voltage level directly by means of an amplifier, however, the output voltage value obtained from the amplifier by means of the adapter circuit can be dropped easily and under control to exactly the desired control voltage level.

In a preferred embodiment of the invention, the measuring and control circuit comprises a voltage limiting circuit, which is disposed in connection with the amplifier input. This circuit serves to prevent feeding of a voltage exceeding the operating voltage level of the control unit to the input of the measuring and control circuit. The measuring and control circuit is not utilised when the switch is in non-conductive state, i.e. when the voltage across the switch is the mains voltage or a similar relatively high voltage compared to the dropout voltage of the conducting switch. The voltage limiting circuit has the purpose and advantage of shielding the amplifier from any overtension.

In a preferred embodiment of the invention, the two-wire switch comprises a rectifying circuit, which is connected over the semiconductor switch, with measuring voltage provided from the rectifier circuit to the Input of the measuring and control circuit. The two-wire switch can be used for connecting both direct current and alternating current to the load. In the case of alternating current connection, the two-wire switch should comprise also a rectifier, over which the measuring voltage is taken to the input of the measuring and control circuit, the measuring and control circuit providing the output of a control signal as direct voltage.

In a preferred embodiment of the invention, the two-wire switch comprises additionally a short-circuit protection circuit, which includes a resistor chain and a second voltage-controlled semiconductor switch, the resistor chain being carried out as serial connection of at least two resistors and connected in parallel with the first semiconductor switch acting as the switch proper, the second voltage-controlled semiconductor switch, preferably a MOSFET or a similar transistor, being connected from the control terminal of the semiconductor switch to the virtual earth, and control voltage being connected to the gate of the second semiconductor switch or to a similar control terminal from the resistor chain with appropriate voltage division. The operation of the short-circuit protection circuit is such that, as the current across the first semiconductor switch and hence across the load increases as a result of short-circuiting, the current across the parallel resistor chain also increases, leading to increased control voltage in the gate of the second semiconductor switch. When the control voltage exceeds the set threshold voltage, the second semiconductor switch is switched on and the regulation voltage of the first semiconductor switch is short-circuited over this to the virtual earth, the first semiconductor switch being switched off and current supply across this to the load being interrupted.

The short-circuit arrangement described above has the advantage of a straightforward design and of simple combination with a measuring and control circuit, together with reliable operation and freedom from maintenance. No separate fuse dispositions will thus be required.

In a preferred embodiment of the invention, a second voltage-controlled semiconductor switch, which pertains to the short-circuiting circuit, is disposed to act also as the control switch of the control circuit of the first semiconductor switch. This control switch is used for controlling, at the desired moment of each half-period of the alternating voltage supplied to the load in phase regulation, the first semi-conductor switch either from off state to conducting state (leading edge regulation) or from conducting state to off state (trailing edge regulation). If the zero position of the load current is exceeded, inverse functions are initiated depending on the type of phase regulation (leading edge regulation or trailing edge regulation). The control unit provides the actual control signal for controlling the second semiconductor switch.

The arrangement described above has the advantage of resulting in an appreciably simpler electronic two-wire switch. In this manner, the major separate components of the short-circuiting circuit and the control of the first semiconductor switch have been integrated in a compact monolithic body.

The invention and its other advantages are explained in greater detail below with reference to the accompanying drawing, in which
- Figure 1: is a principal view of the electronic two-wire switch of the invention;
- Figure 2: illustrates a preferred application of the two-wire switch of the invention; and
- Figure 3: illustrates a second preferred application of the two-wire switch of the invention.

The figures use the same reference numerals for mutually corresponding parts.

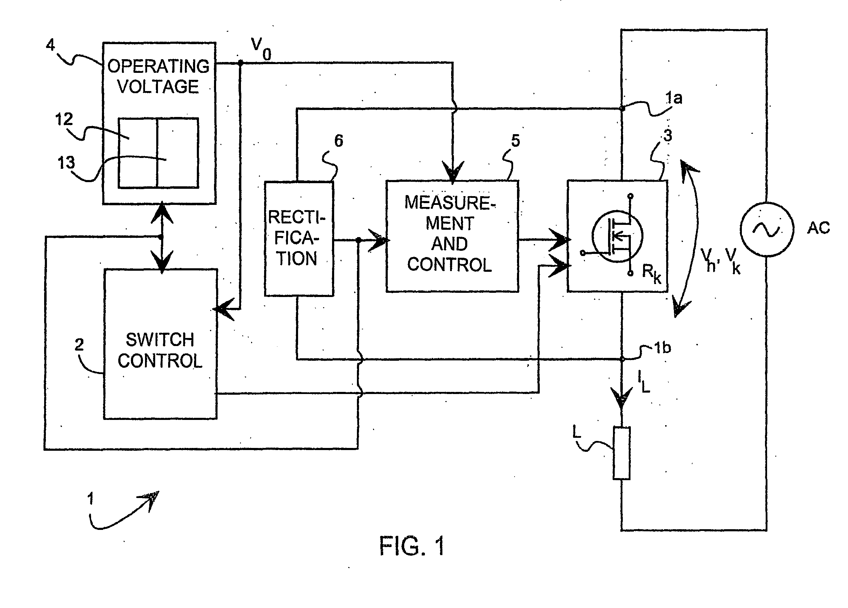

The electronic two-wire switch 1 of the invention is illustrated in figure 1. The two-wire switch is connected in series with the load L and the alternating current source AC has been connected across these. The input terminal 1a of the two-wire switch 1 has been connected to the alternating current source AC and its output terminal 1 b accordingly to the load L. The two-wire switch 1 comprises a control unit 2 for controlling the functions of the switch 3. In addition, the two-wire switch 1 comprises a power source 4 especially for the control unit 2 and for any other units of the two-wire switch requiring electric power. The power source 4 has been disposed to take electric power from the voltage Vₖ, Vₕ across the switch 3 when the switch 3 is in non-conductive or conductive state. When the switch 3 is in non-conductive, i.e. off state, the voltage Vₖ of the alternating current source AC appears across the switch. When the switch 3 is in conductive state, the dropout voltage Vₕ appears across the switch 3.

In accordance with the invention, the two-wire switch 1 comprises a measuring and control circuit 5 for measuring the dropout voltage Vₕ across the switch 3 when the switch 3 is in conductive state and for regulating the resistance Rₖ of the switch 3 and hence the dropout voltage Vₕ, particularly for stabilising it on a predetermined level.

The operating voltage V₀ of the two-wire switch 1 is generated in the power source 4 from the voltage Vₖ, Vₕ across the switch 3. The operating voltage V₀ is generated particularly for the control unit 2, however, in the two-wire switch of the invention, the operating voltage V₀ is generated also for the measuring and control circuit 5. The power source 4 is preferably formed of a direct voltage source 12 and a switched-mode power supply 13 in parallel.

The direct voltage source 12 is preferably a voltage regulator disposed to utilise the voltage Vₖ across the switch 3 in on state, i.e. in non-conductive state, and to stabilise it to suitable direct voltage, i.e. operating voltage V₀. The switched-mode power supply 13 is formed of a suitable chopper circuit, with the dropout voltage Vₕ being controlled to its input across the switch 3. The voltage Vₖ, Vₕ across the switch 3 is rectified with a suitable rectifying circuit 6 before being supplied to the power source 4.

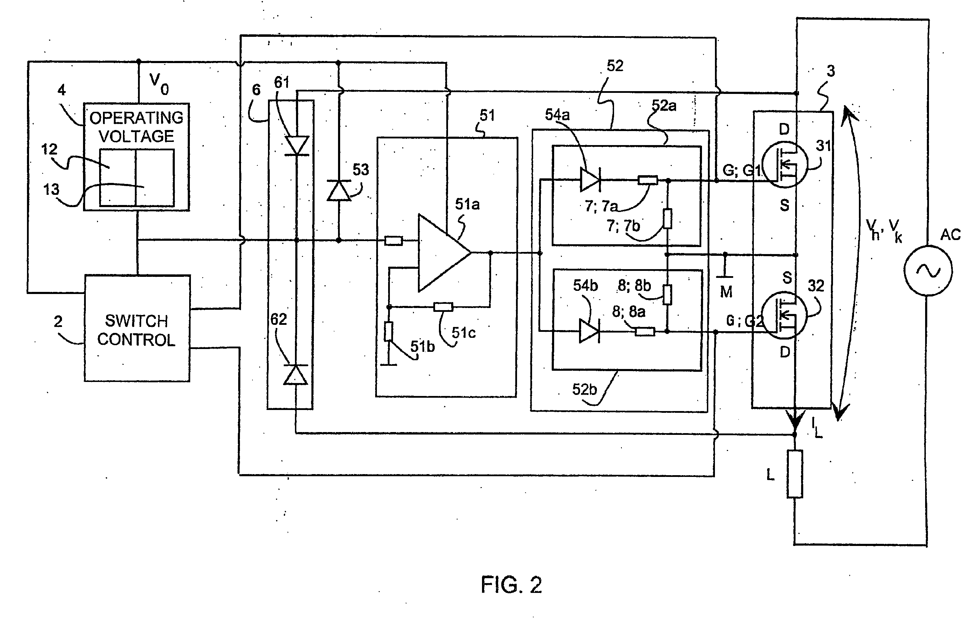

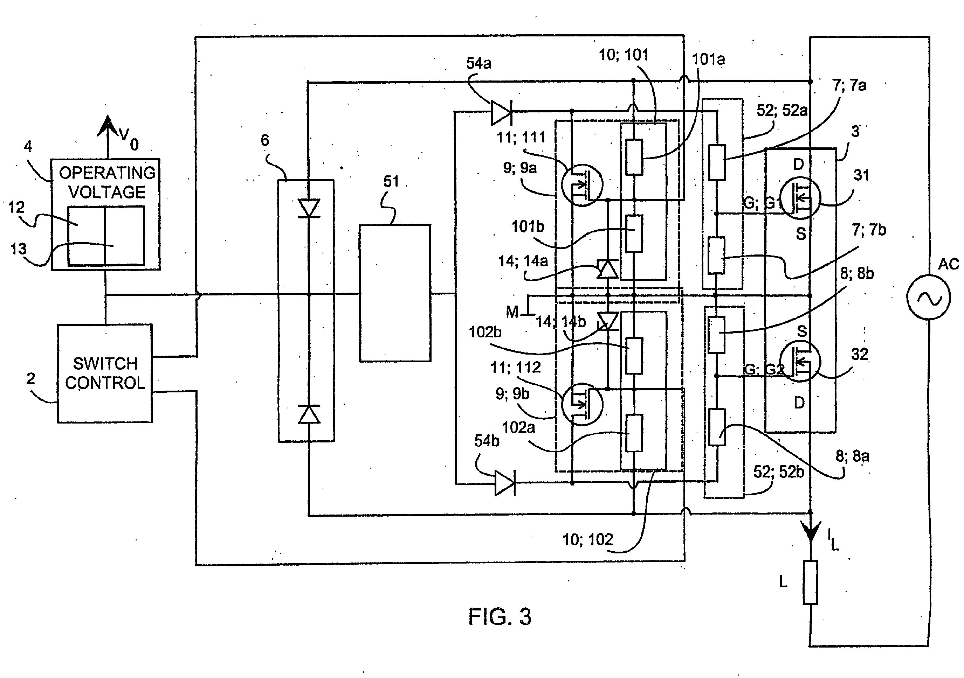

The measuring and control circuit 5 comprises an amplifier 51 for amplifying the dropout voltage Vₕ. The amplifier 51 is preferably an operation amplifier 51a, as illustrated in figures 2 and 3, whose amplification coefficient can be set by changing the ratio of the values of resistances 51 b, 51 c. Using the amplifier, one can raise the dropout voltage Vₕ to control voltage on a level sufficient for controlling the semiconductor switch 3, with a view to regulating especially its resistor Rₖ ,such as the channel resistance of a MOSFET.

The measuring and control circuit 5 also comprises an adapter circuit 52 following the amplifier 51. The adapter circuit is preferably carried out as a resistor chain 7,8, such as serial connection of two resistors 7a, 7b; 8a, 8b. The adapter circuit 52 serves to adapt the control voltage to the correct level for accomplishing the predetermined control range of the resistor Rₖ of the semiconductor switch 3.

In the two-wire switch 1 of the invention, the semiconductor switch 3 is never brought into completely conductive state, but its resistance value Rₖ is regulated in the appropriate range so that the dropout voltage Vₕ across the conductive switch 3 is on the voltage level considered appropriate. This voltage level is determined by the technique used in the power source 4 for the power supply to the control circuit 2 and the other circuits or units connected to the two-wire switch 1. When the switch 3 is switched on and the voltage Vₖ appears across the switch, in other words, basically the voltage of the alternating current source AC, the direct voltage source 12 of the power source 4 is used for generating the prevailing operating voltage Vₒ. When the switch 3 is in conductive state, the corresponding operating voltage V₀ is generated from the dropout voltage Vₕ across the switch 13 by the switched-mode power supply 13. Nowadays, the supply voltage of a switched-mode power supply 13, especially a so-called step-up switching power supply, i.e. the chipping voltage, is approximately 1 V. With advanced technological developments, it may have a clearly lower value in the future. Owing to the invention, the dropout voltage Vₕ across the switch 3 can be regulated to an appropriate level adapted to the switched-mode power supply 13, provided that the value of the dropout resistance Rₖ of the semiconductor switch 3 can be regulated.

In its most advantageous configuration, the measuring and control circuit 5 comprises an amplifier 51 and an adapter circuit 52. A voltage limiting circuit 53 has most advantageously been disposed in connection with the input to the amplifier 51. In addition, the two-wire switch 1 comprises a rectifying circuit 6, which is connected across the semiconductor switches 3, measuring voltage being provided from the rectifying circuit 6 to the input of the measuring and control circuit, especially of the amplifier 51, and also the corresponding input voltage to the input of the power source 4.

In the embodiments of figures 2 and 3, the voltage limiting circuit 53 has been carried out by means of a diode. The anode side of the diode has been connected to the input of the amplifier 51, whereas its cathode side has been connected to the operating voltage V₀. Owing to the voltage limiting circuit 53, any supply of voltage higher than the operating voltage level V₀ to the measuring and control circuit 5 is prevented. In this manner, the measuring and control circuit 5 will operate only when the semi-conductor switch 3 is in conductive state and the dropout voltage Vₕ appears across it.

The rectifying circuit 6 has preferably been carried out by means of opposite diodes 61, 62. They are connected across the semiconductor switch 3. A measuring voltage following the dropout voltage Vₕ is arranged from the rectifying circuit 6, between the diodes 61, 62 in this case, in the input of the measuring and control circuit 5 and at the same time, supply voltage is provided to the power source 4.

In the most advantageous embodiment of the invention, the voltage-controlled semiconductor switch 3 has been made up of two semiconductor switches 31, 32 connected in succession, such as a pair of field-effect transistors, especially a pair of MOSFET. The MOSFET pair has been connected with the source terminals S of the MOSFET connected together, the drain terminals D forming external terminals, to which the alternating current source AC and the load L have been connected accordingly. At the same time, the mutually connected source terminals S of the MOSFET pair have been connected to the virtual earth M, to which all of the earth terminals of the two-wire switch 1 have been connected. It should be noted that the MOSFET contains a so-called body diode, which is a forward diode between the source S and the drain D.

The adapter circuit 5 of the measuring and control circuit 5 has been divided into two parts when a MOSFET pair 31, 32 acts as a semiconductor switch 3. The first and second part 52a, 52b of the adapter circuit 52 have preferably both been carried out as a resistance chain 7, 8, each including at least two serially connected resistors 7a, 7b; 8a, 8b. The output of the measuring and control circuit 5 is connected to the input of each adapter circuit part 52a, 52b across a forward diode 54a, 54b. The adapter circuits 52a, 52b are isolated from each other by means of the diodes 54a, 54b. The gates G1, G2 of the MOSFET pair 31, 32 have been accordingly connected to the output of the first and second part 52a, 52b of the adapter circuit, the output being located appropriately between the serially connected resistors 7a, 7b; 8a, 8b. The other end of the resistor chains 7, 8 has been connected to the common virtual ground M and at the same time between the MOSFET pair 31, 32.

In an optional solution, using e.g. one single two-directional voltage-controlled semiconductor switch or a corresponding semiconductor component, the amplifier 51 of the measuring and control circuit 5 has been disposed at the control terminal of the semiconductor switch 3, such as a gate G, using one single adapter circuit 52, the adapter circuit then corresponding to one adapter circuit part 52a, 52b.

The two-wire switch 1 of the invention has the following operation in principle. Assumingly the semiconductor switch 3 is in conductive state. Then a given dropout voltage Vₕ appears across it. As the supply voltage is obtained from the alternating current source AC, the dropout voltage Vₕ is also alternating current voltage. This voltage is rectified by the rectifier 6, and the pulsating direct voltage thus obtained is directed to the measuring and control circuit 5 (and at the same time to the power source 4 for generation of the operating voltage V₀). The pulsating direct voltage in the measuring and control circuit 5, which is proportional to the dropout voltage Vₕ, is amplified by the amplifier 51 with an appropriate amplification coefficient a, yielding the voltage a Vₕ at the output of the amplifier 51, this voltage being supplied to the adapter circuit 52; 52a, 52b. The output voltage of the amplifier 51 is adapted to form an appropriate regulation voltage naVₕ of the voltage-controlled semiconductor switch 3; 31, 32 at the ratio n determined by the adapter circuit 52; 52a, 52b, the regulation voltage being supplied to the control terminal of the semiconductor switch, i.e. to the gate G; G1, G2. In the embodiment described above, the output voltage from the amplifier 51 is divided by the resistor chain 7, 8 at an appropriate ratio n determined by the resistance values in order to provide the predetermined control voltage of the gate G; G1, G2 for the semiconductor switch 3; 31, 32.

If the load current I_{L} now increases, the value of the dropout voltage Vₕ = I_{L}· Rₖ will increase immediately in the measuring situation, because the value of the resistor Rₖ remains unchanged. Then the control voltage reaching the gate G; G1, G2 of the semiconductor switch 3; 31, 32 increases, thus decreasing the value of the resistor Rₖ of the semiconductor switch. The value of the dropout voltage Vₕ is stabilised, i.e. it resumes the value of the predetermined level. If, again, the load current I_{L} drops, the measurement will indicate a decrease of the value of the dropout voltage Vₕ = I_{L} · Rₖ, and then the control voltage of the gate G; G1, G2 of the semiconductor switch 3; 31, 32 is increased, entailing accordingly an increase of the value of the resistance Rₖ of the semiconductor switch 3; 31, 32, the dropout voltage Vₕ increasing and resuming the predetermined level. The adapter circuit 52 serves for determining the range within the fluctuations of the dropout voltage Vₕ should be kept.

In a preferred embodiment of the invention, the two-wire switch additionally comprises a short-circuit protection circuit 9; 9a, 9b (cf. figure 3). This short-circuit protection circuit 9; 9a, 9b comprises a resistor chain 10; 101, 102 and a second voltage-controlled semiconductor switch 11; 111, 112. The resistor chain 10; 101, 102 has been carried out as serial connection of at least two resistors 101 a, 101b; 102a, 102b. The resistor chain 10; 101, 102 is connected in parallel with the first semi-conductor switch 3; 31, 32 acting as the actual switch. The second voltage-controlled semi-conductor switch 11; 111, 112, preferably a MOSFET or the like, is connected from the control terminal G; G1, G2 of the first semiconductor switch 3; 31, 32 to the earth, in this case to the virtual earth M. The control voltage has been connected to the gate of the second semiconductor switch 11; 111, 112 or to the corresponding control terminal from the resistor chain 10; 101, 102 with an appropriate voltage division. The second voltage-controlled semiconductor switch 11; 111, 112 is shielded against overtension by zener diodes 14; 14a, 14b, which are connected from the control terminal of this semiconductor switch, especially the gate of a MOSFET, to the virtual earth M.

The short-circuit protection circuit described above has the following operation in principle. When there is a strong and rapid increase of the load current I_{L} as a consequence of short-circuiting, the currents across both the semiconductor switch 3; 31, 32 and across the parallel-connected resistor chain 10; 101, 102 will increase accordingly. The measuring and control circuit 5 will not have time to react to the rapid current increase caused by short-circuiting, and then the resistor Rₖ of the switch 3 will remain substantially constant in the short-circuiting situation. The short-circuiting results in an increase of the control voltage in the gate of the second semiconductor switch 11; 111, 112, and when a given threshold voltage is exceeded, the second semiconductor switch 11; 111, 112 is switched on, while the gate G of the first semiconductor switch, i.e. the actual switch 3, is short-circuited over the first semiconductor switch to the virtual earth M. The actual semiconductor switch 3 is consequently switched off, and the load L is no longer supplied with current over this. When the short-circuiting situation is released, the semiconductor switch 3 is fully operational again.

The embodiment of the invention illustrated in figure 3 comprises two short-circuit protection circuits for each semiconductor switch 31, 32 in the MOSFET pair. The short-circuit protection circuits 9; 9a, 9b have preferably been disposed between the amplifier 51 of the measuring and control circuit 5 and the adapter circuit 52.

In a preferred embodiment of the invention, the second semiconductor switch 11; 111, 112 of the short-circuit protection circuit, preferably a MOSFET, is disposed to act also as a control switch included in the control unit 2 of the first semiconductor switch 3; 31, 32. In this case, control voltage signals are supplied from the control unit 2 to the gate of the second semiconductor switch 11; 111, 112, and the state of the second semiconductor switch is converted in a predetermined manner from conductive state to non-conductive state or vice versa.

The two-wire switch 1 of the invention utilises phase regulation known per se. It should be particularly noted that a two-wire switch 1, especially a two-wire switch equipped with a MOSFET pair, can be controlled by utilising two different regulation principles, i.e. either under leading edge regulation or trailing edge regulation. In this conjunction, we refer e.g. to the applicant's previous international Patent Application WO-2004/059825. The control unit 2 can be carried out by means of appropriate logic circuits or by a micro-controller, for instance.

The invention is not confined merely to the embodiments above, but may be varied in many ways without departing from the scope of the inventive idea defined in the claims.

## Claims

1. A two-wire switch (1) comprising a control unit (2) configured to use phase regulation to supply control voltage signals to a switch (3) proper, which are combined with control voltages from a measuring and control unit, the switch (3) proper consisting of at least one voltage-controlled semiconductor switch (3; 31, 32), and comprising additionally a power source (4) for the control unit (2) such that is disposed to take electric power from voltage (Vₖ, Vₕ) across the switch (3) with the switch (3) both in non-conductive and in conductive state, **characterised in that** the two-wire switch (1) is configured not to bring the switch (3) into completely conductive state, and the measuring and control circuit (5) comprises an amplifier (51) for amplifying the dropout voltage (Vₕ) across the switch (3) when the switch (3) is in conductive state and an adapter circuit for adapting an output of the amplifier to a level suitable to operate as a control voltage for regulating the resistance (Rₖ) of the switch and at the same time the voltage (Vₕ) for the power source (4) on the basis of said dropout voltage (Vₕ) by combining an output of the adapter circuit with the control voltage signals from the control unit (2).

2. A two-wire switch as defined in claim 1, **characterised in that** the adapter circuit (52) is carried out as a resistor chain (7, 8), such as serial connection of at least two resistors (71, 72; 81, 82).

3. A two-wire switch as defined in any of the preceding claims, **characterised in that** the measuring and control circuit (5) comprises a voltage-limiting circuit (53) disposed in the input of the amplifier (51).

4. A two-wire switch as defined in any of the preceding claims, **characterised in that** the two-wire switch (1) comprises a rectifying circuit (6) connected across the semiconductor switch (3; 31, 32), with voltage supplied from the rectifying circuit (6; 61, 62) to the input of the measuring and control circuit (5).

5. A two-wire switch as defined in any of the preceding claims, **characterised in that** the two-wire switch (1) comprises additionally a short-circuit protection circuit (9; 9a, 9b), including a resistor chain (10; 101, 102) and a second voltage-controlled semiconductor switch (11; 111, 112), the resistor chain (10; 101, 102) being carried out as serial connection of at least two resistors (101 a, 101b; 102a, 102b) and connected in parallel with the first semiconductor switch (3, 31, 32) acting as the switch proper, the second voltage-controlled semiconductor switch (11; 111, 112), preferably a MOSFET or similar, being connected from the control terminal of the semiconductor switch to the earth.

6. A two-wire switch as defined in claim 5, **characterised in that** the second voltage-controlled semiconductor switch (11; 111, 112), preferably a MOSFET, is disposed to act also as the control switch of the control circuit of the first semiconductor switch (3; 31, 32).

7. A two-wire switch as defined in any of the preceding claims, **characterised in that** the voltage-controlled semiconductor switch (3) consists of two semiconductor switches connected in succession, such as a pair of field-effect transistors, especially MOSFET (31, 32).

## Patentansprüche

1. Zweidraht-Schalter (1), umfassend eine Steuer-/Regeleinheit (2), die konfiguriert ist, um eine Phasen-Regelung zu verwenden, um Steuer-/Regel-Spannungssignale zu einem eigentlichen Schalter (3) zu liefern, welche mit Steuer-/Regelspannungen von einer Mess- und Steuer-/Regeleinheit kombiniert werden, wobei der eigentliche Schalter (3) aus wenigstens einem spannungsgesteuerten/-geregelten Halbleiter-Schalter (3; 31, 32) besteht,
und zusätzlich umfassend eine Energiequelle (4) für die Steuer-/Regeleinheit (2), die angeordnet ist, um elektrische Energie von einer Spannung (Vₖ, Vₕ) über den Schalter (3) zu nehmen, sowohl mit dem Schalter (3) im nichtleitenden als auch im leitenden Zustand,
**dadurch gekennzeichnet, dass** der Zweidraht-Schalter (1) konfiguriert ist, den Schalter (3) nicht in einen vollständig leitenden Zustand zu bringen, und der Mess- und Steuer-/Regelschaltkreis (5) einen Verstärker (51) umfasst, um die über den Schalter (3) abfallende Spannung (Vₕ) zu verstärken, wenn sich der Schalter (3) im leitenden Zustand befindet, und einen Adapter-Schaltkreis, um eine Ausgabe des Verstärkers an einen Pegel anzupassen, der geeignet ist, um als eine Steuer-/Regelspannung zu arbeiten, um den Widerstand (Rₖ) des Schalters und zur gleichen Zeit die Spannung (Vₕ) für die Energiequelle (4) auf der Grundlage von der abfallenden Spannung (Vₕ) zu regulieren, indem eine Ausgabe von dem Adapter-Schaltkreis mit den Steuer-/Regel-Spannungssignalen von der Steuer-/Regeleinheit (2) kombiniert wird.

2. Zweidraht-Schalter nach Anspruch 1,
**dadurch gekennzeichnet, dass** der Adapter-Schaltkreis (52) als eine Widerstandskette (7, 8) ausgeführt ist, wie zum Beispiel eine Serienschaltung von wenigstens zwei Widerständen (71, 72; 81, 82).

3. Zweidraht-Schalter nach einem der vorhergehenden Ansprüche,
**dadurch gekennzeichnet, dass** der Mess- und Steuer-/Regelschaltkreis (5) einen Spannungsbegrenzer-Schaltkreis (53) umfasst, der an dem Eingang des Verstärkers (51) angeordnet ist.

4. Zweidraht-Schalter nach einem der vorhergehenden Ansprüche,
**dadurch gekennzeichnet, dass** der Zweidraht-Schalter (1) einen Gleichrichter-Schaltkreis (6) umfasst, der parallel zu dem Halbleiter-Schalter (3; 31, 32) geschaltet ist, wobei eine Spannung von dem Gleichrichter-Schaltkreis (6; 61, 62) zu dem Eingang von dem Mess- und Steuer-/Regelschaltkreis (5) geliefert wird.

5. Zweidraht-Schalter nach einem der vorhergehenden Ansprüche,
**dadurch gekennzeichnet, dass** der Zweidraht-Schalter (1) zusätzlich einen Kurzschluss-Schutz-Schaltkreis (9; 9a, 9b) umfasst, welcher eine Widerstandskette (10; 101, 102) und einen zweiten spannungsgesteuerten/-geregelten Halbleiter-Schalter (11; 111, 112) umfasst, wobei die Widerstandskette (10; 101, 102) als eine Serienschaltung von wenigstens zwei Widerständen (101a, 101b; 102a, 102b) ausgeführt ist, und parallel zu dem ersten Halbleiter-Schalter (3, 31, 32) geschaltet ist, welcher als der eigentliche Schalter wirkt, wobei der zweite spannungsgesteuerte/-geregelte Halbleiter-Schalter (11; 111, 112), vorzugsweise ein MOSFET oder Ähnliches, zwischen den Steuer-/Regelterminal des Halbleiter-Schalters und Erde geschaltet ist.

6. Zweidraht-Schalter nach Anspruch 5,
**dadurch gekennzeichnet, dass** der zweite spannungsgesteuerte/- geregelte Halbleiter-Schalter (11; 111, 112), vorzugsweise ein MOSFET, angeordnet ist, um ebenfalls als der Steuer-/Regelschalter für den Steuer-/Regelschaltkreis von dem ersten Halbleiter-Schalter (3; 31, 32) zu wirken.

7. Zweidraht-Schalter nach einem der vorhergehenden Ansprüche,
**dadurch gekennzeichnet, dass** der spannungsgesteuerte/-geregelte Halbleiter-Schalter (3) aus zwei Halbleiter-Schaltern besteht, die hintereinander geschaltet sind, wie zum Beispiel ein Paar von Feldeffekt-Transistoren, insbesondere MOSFET (31, 32).

## Revendications

1. Commutateur (1) à deux fils comprenant un système de commande (2) conçu pour utiliser une régulation de phase afin de fournir à un commutateur proprement dit (3) des signaux de tension de commande, lesquels sont combinés à des tensions de commande fournies par un système de mesure et de commande, le commutateur proprement dit (3) étant constitué d'au moins un commutateur (3 ; 31 ; 32) semi-conducteur commandé en tension, et comprenant en outre, pour le système de commande (2), une source d'électricité (4) disposée pour prélever de l'électricité de la tension (Vₖ, Vₕ) dans le commutateur (3), le commutateur (3) étant aussi bien dans un état non conducteur que dans un état conducteur, le commutateur (1) à deux fils étant **caractérisé en ce qu'**il est conçu pour ne pas mettre le commutateur (3) dans un état entièrement conducteur, et le circuit de mesure et de commande (5) comporte un amplificateur (51) pour amplifier la tension de retombée (Vₕ) dans le commutateur (3) lorsque le commutateur (3) est dans un état conducteur et un circuit adaptateur pour adapter une sortie de l'amplificateur à un niveau convenant pour servir de tension de commande afin de réguler la valeur de résistance (Rₖ) du commutateur et en même temps la tension (Vₕ) pour la source d'électricité (4) d'après ladite tension de retombée (Vₕ) en combinant une sortie de circuit adaptateur avec les signaux de tension de commande issus du système de commande (2).

2. Commutateur à deux fils selon la revendication 1, **caractérisé en ce que** le circuit adaptateur (52) se présente sous la forme d'une chaîne de résistances (7, 8) telle qu'un montage série d'au moins deux résistances (71, 72 ; 81, 82).

3. Commutateur à deux fils selon l'une quelconque des revendications précédentes, **caractérisé en ce que** le circuit de mesure et de commande (5) comporte un circuit limiteur de tension (53) disposé à l'entrée de l'amplificateur (51).

4. Commutateur à deux fils selon l'une quelconque des revendications précédentes, **caractérisé en ce que** le commutateur (1) à deux fils comporte un circuit redresseur (6) monté sur le commutateur (3 ; 31, 32) semi-conducteur, une tension étant appliquée du circuit redresseur (6 ; 61, 62) à l'entrée du circuit de mesure et de commande (5).

5. Commutateur à deux fils selon l'une quelconque des revendications précédentes, **caractérisé en ce que** le commutateur (1) à deux fils comporte en outre un circuit de protection (9 ; 9a, 9b) contre les courts-circuits, comprenant une chaîne de résistances (10 ; 101, 102) et un second commutateur (11 ; 111, 112) semi-conducteur commandé en tension, la chaîne de résistances (10 ; 101, 102) se présentant sous la forme d'un montage série d'au moins deux résistances (101a, 101b ; 102a, 102b) et étant montée en parallèle avec le premier commutateur (3 ; 31, 32) semi-conducteur servant de commutateur proprement dit, le second commutateur (11 ; 111, 112) à semi-conducteur commandé en tension étant de préférence un MOSFET ou analogue, connecté à la terre depuis la borne de commande du commutateur semi-conducteur.

6. Commutateur à deux fils selon la revendication 5, **caractérisé en ce que** le second commutateur (11 ; 111, 112) à semi-conducteur commandé en tension, de préférence un MOSFET, est disposé pour servir également d'interrupteur de commande du circuit de commande du premier commutateur (3 ; 31, 32) semi-conducteur.

7. Commutateur à deux fils selon l'une quelconque des revendications précédentes, **caractérisé en ce que** le commutateur (3) semi-conducteur commandé en tension est constitué de deux commutateurs semi-conducteurs tels qu'une paire de transistors à effet de champ, en particulier des MOSFET (31, 32), montés à la suite l'un de l'autre.
